# EUROPÄISCHE PATENTANMELDUNG

(11) **EP 1 162 559 A2**
(43) Veröffentlichungstag der Anmeldung: **12.12.2001**
(21) Anmeldenummer: 01112586.1
(22) Anmeldetag: 23.05.2001
(51) Int. Cl.: G06F 17/60

(54) **Verfahren zur elektronischen Terminplanung und elektronischer Terminplaner hierfür**

(30) Priorität: 09.06.2000 DE 10028660
(71) Anmelder: NOKIA MOBILE PHONES LTD., 02150 Espoo (FI)
(72) Erfinder: Baur, Reinhold, 89233 Neu-Ulm (DE); Miettinen, Eero, 02150 Espoo (FI); Roque-Cerna, Maximiliano, 89312 Günzburg (DE)
(74) Vertreter: TER MEER STEINMEISTER & PARTNER GbR

(57) **Zusammenfassung**

Die Erfindung befaßt sich mit der Verbesserung von elektronischen Terminplanern (10), insbesondere mit solchen Terminplanern (10), die zeitlich vor einem Termin eine Meldung an den Nutzer geben. Um dies zu realisieren, sind ein eletronischer Terminplaner (10), ein Kalendarium (11), in welchem Termine mindestens nach Ort, Datum und Uhrzeit einstellbar sind, ein Modul (16) zur Bestimmung von geographischen Positionen und eine Anordnung (17) zur Ermittlung und Ausgabe von Wegstrecken erforderlich. Außerdem steht der Terminplaner (10) mit einer Schnittstelle (12), mit dem Modul (16) und der Anordnung (17) im Datenaustausch. Wird nun ein Termin in das Kalendarium (11) eingetragen, werden die mit diesem Termin verbundenen Daten an die Anordnung (17) übergeben. In Abhängigkeit von der geographischen Position wird dann die Zeitspanne für das Erreichen des Termins mittels der Anordnung (17) kalkuliert und, wenn die momentane Uhrzeit plus der errechneten Zeitspanne den Daten des Termins entspricht, dem Nutzer ein Signal gegeben.

## Beschreibung

### Technisches Gebiet

Die Erfindung befaßt sich mit der Verbesserung von elektronischen Terminplanern, insbesondere mit solchen Terminplanern, die zeitlich vor einem Termin eine Meldung an den Nutzer geben, sowie mit einem entsprechenden Verfahren hierfür.

### Stand der Technik

Im Stand der Technik sind seit einiger Zeit Terminplaner bekannt, in die zur Organisation und Koordination von Terminen Daten eingegeben werden können und die dem Nutzer einen Hinweis geben, daß unter Angabe der Uhrzeit an diesem oder am nächsten Tag ein bestimmter Termin ansteht. Diese Angaben und Hinweise an den Nutzer sind aber nur bedingt hilfreich. Ist beispielsweise der Termin mit einem Ortswechsel verbunden, erhält der Nutzer keine exakten Hinweise wann er letztlich aufbrechen muß, um den Termin sicher zu erreichen. Zwar ist es möglich den Terminplaner so einzustellen, daß er dem Nutzer unter Berücksichtigung von Erfahrungswerten und Benutzervorgaben den Hinweis zum Aufbruch gibt; eine exakte Angabe ist dies allerdings nicht. Fährt der Nutzer beispielsweise häufiger die Strecke Karlsruhe-München und hat der Nutzer aufgrund seiner Erfahrungen aus der Vergangenheit für diese Strecke eine Durchschnittsgeschwindigkeit von 95 km/h eingegeben, wird er seinen Termin in München dann nicht halten können, wenn er plötzlich durch starken Reiseverkehr und/oder Witterungseinflüsse nur noch eine Durchschnittsgeschwindigkeit von 70 km/h erreicht. Ein ähnlich schlechtes Zeitmanagement ist dann gegeben, wenn der Nutzer die gleiche Strecke während der frühen Morgenstunden befahren will. Geht man davon aus, daß während der frühen Morgenstunden noch keine Straßenüberlastung gegeben und eine durchschnittliche Geschwindigkeit von 120 km/h realistisch ist, wird der auf die angenommenen 95 km/h programmierte Terminplaner zu früh das Signal zum Aufbruch geben. Gänzlich versagen die bekannten Terminplaner dann, wenn der Startort nicht mehr -wie angenommen- Karlsruhe, sondern Frankfurt ist.

Daher liegt der Erfindung die Aufgabe zugrunde, ein Verfahren und einen Terminplaner anzugeben, um unabhängig von fest vorgegebenen Erfahrungswerten und/oder Benutzereingaben zur Strecke dem Nutzer unter großer Realitätsnähe eine Mitteilung zum rechtzeitigen Erreichen des nächsten Termins geben zu können.

### Darstellung der Erfindung

Die vorrichtungsseitige Aufgabe wird mit den Merkmalen gemäß Anspruch 1 gelöst, die verfahrensseitige mit den Merkmalen des Anspruchs 8. Vorteilhafte Aus- und Weiterbildungen der Erfindung sind den Unteransprüchen entnehmbar.

Ist gemäß Anspruch 1 ein Modul zur Bestimmung von geographischen Positionen und eine Anordnung zur Ermittlung und Ausgabe von Wegstrecken vorhanden und ist der Terminplaner mit einer Schnittstelle versehen, mit welcher der Terminplaner mit dem Modul zur Bestimmung von geographischen Positionen und der Anordnung zur Ermittlung und Ausgabe von Wegstrecken in Datenaustausch steht, wird sichergestellt, daß auf der Basis der zur Verfügung stehenden Daten der Nutzer immer eine realitätsnahe Mitteilung zum Erreichen des nächsten Termins erhält. Mögliche Ortswechsel nach Eingabe des Termins werden bedeutungslos, wenn gemäß Anspruch 2 wenigstens einmal vor dem eingeschriebenen Termin anhand der Daten aus dem Modul zur Bestimmung von geographischen Positionen der Standort und mittels der Anordnung zur Ermittlung und Ausgabe von Wegstrecken die Fahrtzeit zu der Adresse des Termins ermittelt werden und der Terminplaner ein Signal abgibt, wenn die momentane Uhrzeit plus der ermittelten Fahrzeit oder plus der ermittelten Fahrzeit und eines Sicherheitszuschlags der Uhrzeit des Termins entspricht. Dies kann z. B. periodisch oder in anderen vorbestimmten Zeitintervallen geschehen.

Die Eingabe von Daten in den Terminplaner ist reduziert, wenn gemäß Anspruch 3 der Terminplaner mit einer Abgleichsanordnung versehen ist, welche aus den eingeschriebenen Termindaten die Adresse für den Terminort aus einer vorhandenen Datei bzw. Adressendatei ermittelt.

Werden gemäß Anspruch 4 wenigstens einmal vor Ausgabe des Signals aktuelle Meldungen abgefragt und ggf. in die Ermittlung der Fahrtzeit einbezogen, wird sichergestellt, daß das Signal so rechtzeitig ausgegeben wird, daß der Termin sicher erreicht wird, ohne daß der Nutzer zu früh an den Termin erinnert wird. Ist der Terminplaner mit einer weiteren Schnittstelle versehen, die mit einer Datenquelle einer vom Terminplaner getrennten Anordnung in Datenaustausch steht, und werden die Daten der Datenquelle in Abhängigkeit von der in das Kalendarium eingetragenen Uhrzeit abgefragt und/oder angezeigt, kann auf weitere mit dem Termin in Verbindung stehende Gegebenheiten automatisch oder manuell Einfluß genommen werden.

### Kurze Darstellung der Figuren

Es zeigen:
- Fig. 1: eine erste Anordnung gemäß der Erfindung und
- Fig. 2: eine weitere Anordnung gemäß der Erfindung.

### Wege zum Ausführen der Erfindung

Die Erfindung soll nun anhand der Figuren näher erläutert werden.

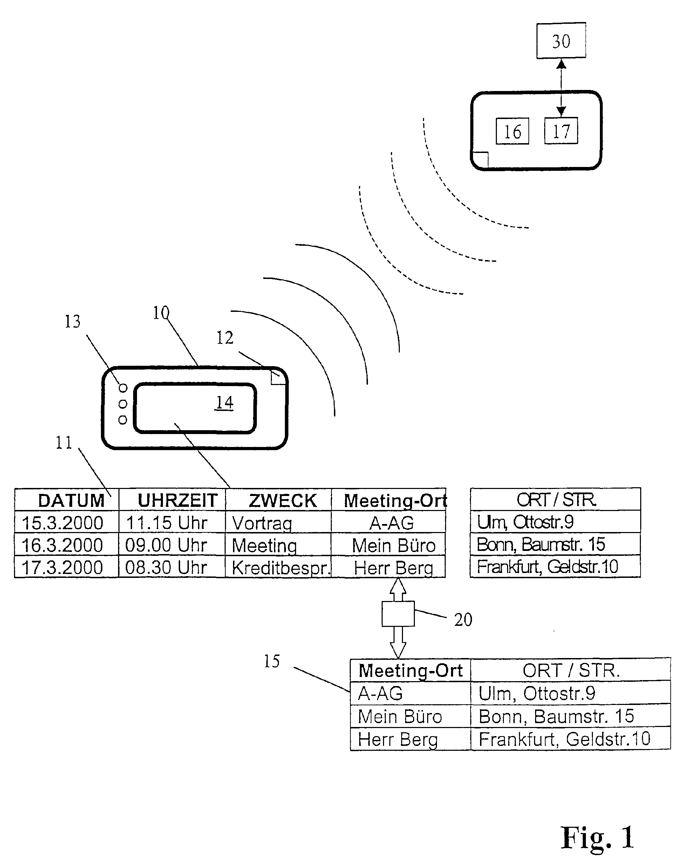

In Fig. 1 ist mit der Bezugsziffer 10 ein Terminplaner gezeigt. Dieser Terminplaner 10 umfaßt neben einem Kalendarium 11 (Speicherabschnitt) auch eine erste Schnittstelle 12. Zur besseren Darstellung der Verhältnisse ist in Fig. 1 das Kalendarium 11 unterhalb des Terminplaners 10 vergrößert veranschaulicht. Deutlich ist der Darstellung des Kalendariums 11 entnehmbar, daß dieses im vorliegenden Fall vier Spalten (Datum, Uhrzeit, Zweck und Meeting-Ort) hat und über eine Mehrzahl von Zeilen verfügt, von denen in Fig. 1 allerdings nur 3 gezeigt und bereits mit Terminen bzw. Terminangaben beschrieben sind.

Die Eingabe eines neuen Termins ist vorliegend so organisiert, daß bei Betätigung eines entsprechenden Funktionsknopfes 13 am Terminplaner 10 dem Nutzer eine leere Zeile auf dem Display 14 des Terminplaners 10 zur Verfügung gestellt wird, die er dann entsprechend den Überschriften der Spalten mit Daten für seinen Termin auszufüllen hat. Für die Eingabe des Termins, welcher in der ersten in Fig. 1 gezeigten Zeile gezeigt ist, hätte der Nutzer über eine Tastatur (nicht gezeigt) in der ersten Spalte den Eintrag "15.3.2000", in der zweiten Spalte den Eintrag "11.15", in der dritten Spalte den Eintrag "Vortrag" und in der vierten Spalte den Eintrag "A-AG" machen müssen. Auffällig ist, daß neben den eben genannten Einträgen vom Nutzer keine Angabe der Anschrift verlangt wird. Diese wird vielmehr dem jeweiligen Termineintrag dadurch beigestellt, daß eine Adressdatei 15 im Terminplaner 10 vorhanden ist, die mit dem Kalendarium 11 über die Spalte Meeting-Ort verknüpft ist und über eine Abgleichsanordnung 20 verfügt. Letzteres ist mit dem Doppelpfeil in Fig. 1 angedeutet. Diese Verknüpfung bewirkt, daß mit Eingabe des jeweiligen Meeting-Orts die für diesen Eintrag relevante Anschrift aus der Adressdatei 15 herausgesucht und mit dem jeweiligen Termin verbunden wird. Für den in der ersten Zeile in Fig. 1 eingetragenen Termin bedeutet dies, daß anhand des getätigten Eintrags in der Spalte Meeting-Ort "A-AG" die zugehörige Adresse "Ulm, Ottostr. 9" aus der Adressdatei 15, welche für diesen Zweck ebenfalls mit einer Spalte Meeting-Ort versehen ist, herausgesucht und mit dem Zeileneintrag im Kalendarium 11 verbundenen wird. Ob dabei die genaue, anhand des Meeting-Orts ermittelte Anschrift im Kalendarium 11 angezeigt wird oder nicht, ist für die Funktionsweise der Erfindung ohne Bedeutung. Wird sie allerdings angezeigt, kann dies für den Nutzer von Vorteil sein. Hat beispielsweise die A-AG mehrere Niederlassungen, kann der Nutzer, wenn ihm die Anschriften der Niederlassungen angezeigt werden, mit dem Eintrag gleichzeitig die Anschrift der Niederlassung der A-AG auswählen, die für seinen Termin relevant ist.

Nur der Vollständigkeit halber sei darauf hingewiesen, daß das Kalendarium 11 nicht notwendig über die Spalte Meeting-Ort mit der Adressdatei verbunden sein muß. Vielmehr kann in einem anderen -nicht dargestellten- Ausführungsbeispiel die jeweilige Anschrift aus der Adressdatei 15 auch über eine ins Kalendarium 11 eingeschriebene Telefonnummer oder einen Personennamen verknüpft sein, wenn anstelle der Spalten Meeting-Ort im Kalendarium 11 und der Adressdatei 15 entsprechende Spalten vorgesehen werden.

Ist oder sind die Termineinträge im Terminplaner 10 getätigt, kann die Terminüberwachung gemäß der Erfindung beginnen. Dazu ist notwendig, daß ein Modul 16 zur Bestimmung von geographischen Positionen und eine Anordnung 17 zur Ermittlung von Wegstrecken vorhanden ist. Außerdem ist erforderlich, daß der Terminplaner 10 über eine erste Schnittstelle mit dem Modul 16 und der Anordnung 17 in Datenaustausch steht. Hierbei ist nicht notwendig, daß der Terminplaner 10 entsprechend Fig. 1 mit dem Modul 16 und der Anordnung 17 über eine Luftstrecke verbunden ist. Vielmehr kann in einem anderen -nicht weiter dargestellten- Ausführungsbeispiel der Terminplaner 10 mit dem Modul 16 und/oder der Anordnung 17 zu einer körperlichen Einheit verbunden sein.

Für die weiteren Ausführungen wird aber entsprechend Fig. 1 davon ausgegangen, daß das Modul 16 und die Anordnung 17 Teile einer Kraftfahrzeuginstallation sind, und daß das Modul 16 und die Anordnung 17 mit dem Terminplaner 10 über eine Luftstrecke verbunden ist. Nur der Vollständigkeit halber sei darauf hingewiesen, daß das Modul 16 ein GPS-Modul (Global Positioning System) ist und daß es sich bei der Anordnung 17 zur Ermittlung und Ausgabe von Wegstrecken um eine solche handelt, welches bereits in großen Stückzahlen als Navigationsanordnung beispielsweise in Kraftfahrzeugen Einzug gehalten hat.

Ist ein neuer Termin in das Kalendarium 11 eingetragen worden, ist es notwendig, daß wenigstens einmal vor dem eingeschriebenen Termin anhand der Daten aus dem Modul 16 die geographische Position bestimmt und mittels der Anordnung 17 zur Ermittlung und Ausgabe von Wegstrecken die Fahrtzeit zur Adresse des Termins ermittelt wird. Wie die Fahrtzeit ermittelt wird, wird weiter unten erläutert.

Um sicherzustellen, daß der Termin immer erreicht, gleichzeitig aber der Datenaustausch auf ein Minimum reduziert wird, ist vorliegend der Datenaustausch so organisiert, daß mit Eingabe eines neuen Termins sofort die Fahrtzeit und die momentane Entfernung zum Ziel ermittelt werden . Da entsprechend dem Ausführungsbeispiel gemäß Fig. 1 die Einheit aus Modul 16 und Anordnung 17 vom Terminplaner räumlich getrennt ist, ist, da die Einheit aus Modul 16 und Anordnung 17 zwischenzeitlich noch bewegt werden kann, vorgesehen, daß bei einer Standortveränderung um einen Betrag von beispielsweise 50 Kilometern eine neue Zeitberechnung durchgeführt wird. Geht man davon aus, daß das Fahrzeug nach der Eingabe des Termins in der ersten Zeile des Kalendariums 11 nicht mehr bewegt wurde, wird vom Terminplaner 10 ein Signal ausgegeben, wenn die montane Uhrzeit plus der ermittelten Fahrtzeit oder plus der ermittelten Fahrtzeit und eines Sicherheitszuschlages der Uhrzeit des Termins entspricht.

Um die Entfernungsangabe zwischen dem momentanen Standort und dem Terminort in eine Zeitangabe umzusetzen, kann vorgesehen sein, daß der Benutzer manuelle Vorgaben trifft, indem er beispielsweise für Fahren auf Autobahnen eine Durchschnittsgeschwindigkeit von 100 km/h und auf Landstraßen eine solche von 70 km/h eingibt. Da die Eingabe von Durchschnittsgeschwindigkeiten neben dem Zeitaufwand auch sehr leicht zu Fehleingaben führen kann, kann in einem anderen Ausführungsbeispiel diese Eingabe von einem selbstlernenden System übernommen werden, in dem das Fahrverhalten des Fahrers für verschiedene Straßentypen und unterschiedliche Tageszeiten analysiert wird.

Auch kann vorgesehen sein, daß die Zeit, welche zur Bewältigung der Strecke zwischen dem momentanen Standort und dem Terminort benötigt wird, anhand der Routenführung ermittelt wird. Hierzu ist erforderlich, daß zusätzlich zu den zur Zielführung ausgesuchten Straßen auch deren Geschwindigkeitsbeschränkungen bekannt sind. Steht die Routenführung fest, kann dann anhand der bekannten Geschwindigkeitsbeschränkungen für die benutzten Straßen die Fahrtzeit ermittelt werden.

Ergibt sich nach einem Datenaustausch, daß die momentane Uhrzeit plus der ermittelten Fahrtzeit zu der Adresse des Termins bzw. plus der ermittelten Fahrtzeit und eines Sicherheitszuschlages der Uhrzeit entspricht, die im Kalendarium 11 für den entsprechenden Termin eingetragen ist, wird ein Erinnerungssignal zum Aufbruch an den Nutzer ausgegeben. Auch kann vorgesehen sein, daß beispielsweise 15 Minuten vor Ausgabe des Erinnerungssignals ein Vorsignal erzeugt und ausgegeben wird.

Für den in der ersten Zeile des Kalendariums 11 gemäß Fig. 1 eingetragenen Termin bedeutet dies, daß bei einem Standort des Fahrzeugs in Stuttgart für die Strecke nach Ulm zur A-AG anhand einer der oben beschriebenen und eingesetzten Methoden zur Zeitberechnung und bei einer Fahrtzeit von 1,5 Stunden der Nutzer am 15.3.2000 um 9.45 Uhr ein Erinnerungssignal zum Aufbruch zu seinem Termin in Ulm erhält. Ist die Option mit einem Vorsignal realisiert, wird dieses um 9.30 Uhr an den Nutzer ausgegeben.

Da nicht ausgeschlossen werden kann, daß durch Verkehrsstaus oder Witterungseinflüsse die vorgeschlagene Strecke nicht in der ermittelten Zeitspanne bewältigt werden kann, kann vorgesehen sein, daß die Anordnung 17 Zugriff auf eine Datenbank 30 hat, die Verkehrsmeldungen zur Verfügung stellt. Für die Fahrt von Stuttgart nach Ulm bedeutet dies, daß zusätzlich zu der oben erläuterten Zeitberechnung auch noch die Datenbank 30 mit den Verkehrsmeldungen abgefragt wird. Ergibt diese Abfrage beispielsweise, daß auf der Strecke von Stuttgart nach Ulm mit einer staubedingten Verzögerung von 15 Minuten gerechnet werden muß, wird diese Information einbezogen, indem der Nutzer nicht erst um 9.45 Uhr, sondern bereits um 9.30 Uhr das Erinnerungssignal zum Aufbruch erhält.

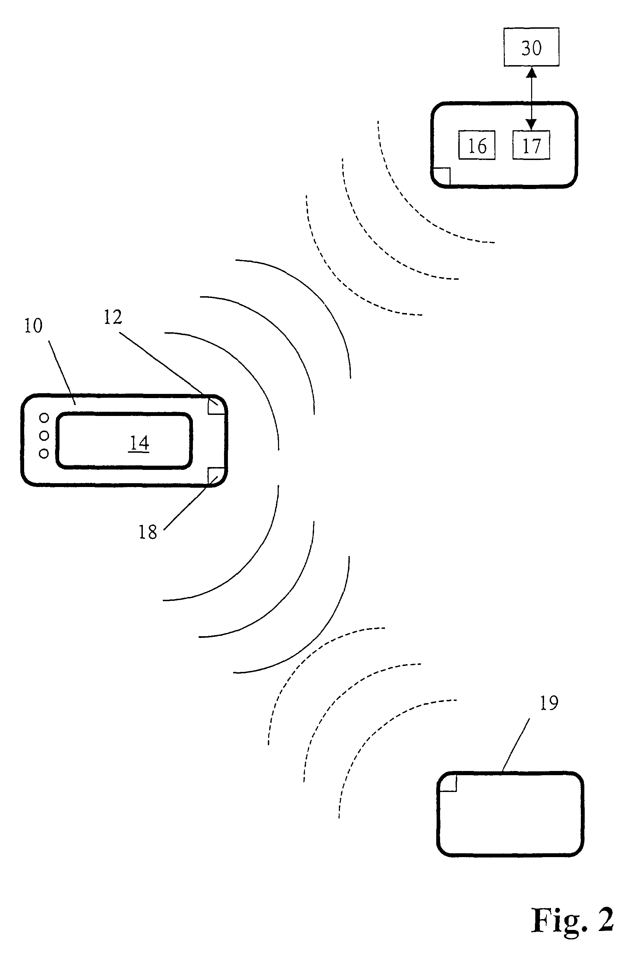

In Fig. 2 ist ausgehend vom Ausführungsbeispiel gemäß Fig. 1 der Terminplaner 10 mit einer weiteren Schnittstelle 18 versehen. Über diese Schnittstelle 18, welche nicht notwendig von der Schnittstelle 12 verschieden sein muß, steht der Terminplaner 10 mit einer vom Terminplaner 10 getrennten Anordnung 19 in Datenaustausch. Vorliegend wird diese Anordnung 19 von einem Autothermometer gebildet, welches die im Fahrzeug vorherrschenden Temperaturen ermittelt und über eine Sendeeinrichtung 20 an den Terminplaner 10 überträgt. Um den Datenaustausch zwischen dem Terminplaner 10 und der Anordnung 19 auf ein Minimum zu beschränken, ist vorgesehen, daß die Daten der Anordnung 19 in Abhängigkeit von den ins Kalendarium 11 eingetragenen Uhrzeiten abgefragt bzw. von der Anordnung 19 dem Kalendarium 10 zur Verfügung gestellt werden.

Haben beispielsweise in der Nacht vom 14.3.2000 zum 15.3.2000 Minustemperaturen vorgeherrscht und ist die Temperatur im Fahrzeug am 15.03.2000 um 9.00 Uhr erst bei 2° C, bedeutet dies für die Fahrt von Stuttgart nach Ulm entsprechend der ersten Zeile gemäß Fig. 1, daß dem Nutzer dieser Zustand auf dem Terminplaner 10 angezeigt und/oder an ihn über den Terminplaner 10 die Frage gestellt wird, ob die Standheizung rechtzeitig vor Fahrtbeginn für eine Erwärmung des Innenraums sorgen soll.

Nur der Vollständigkeit halber sei darauf hingewiesen, daß entsprechend den Ausführungen im letzten Absatz auch beispielsweise die Klimaanlage eingeschaltet und/oder die Motorvorwärmung veranlaßt werden kann.

Da nach den bisherigen Ausführungen der Terminplaner 10 zumindest mit der Anordnung 19 keine körperliche Einheit bildet und mit dieser über eine Luftstrecke in Datenaustausch steht, umfaßt der Terminplaner 10 eine Einheit zur mobilen Kommunikation.(nicht gezeigt). Solche Anordnungen sind im Stand der Technik unter dem Begriff Communicator oder Mobiltelefon bekannt.

## Patentansprüche

1. Elektronischer Terminplaner
mit einem Kalendarium (11), in welchem Termine mindestens nach Ort, Datum und Uhrzeit vorhanden sind,
**dadurch gekennzeichnet, daß**
der Terminplaner (10) mit einer Schnittstelle (12) versehen ist, über die er mit einem Modul (16) zur Bestimmung von geographischen Positionen und einer Anordnung (17) zur Ermittlung und Ausgabe von Wegstrecken verbindbar ist, um Daten auszutauschen.

2. Elektronischer Terminplaner nach Anspruch 1
**dadurch gekennzeichnet, daß** er so ausgebildet ist,
daß wenigstens einmal vor dem eingeschriebenen Termin anhand der Daten aus dem Modul (16) zur Bestimmung von geographischen Positionen sein Standort und mittels der Anordnung (17) zur Ermittlung und Ausgabe von Wegstrecken eine Fahrzeit zu der Adresse des Termins ermittelt wird, und
daß durch den Terminplaner (10) ein Signal ausgebbar ist, wenn die momentane Uhrzeit plus der ermittelten Fahrtzeit oder plus der ermittelten Fahrtzeit und eines Sicherheitszuschlags der Uhrzeit des Termins entspricht.

3. Elektronischer Terminplaner nach Anspruch 1 oder 2
**dadurch gekennzeichnet, daß** er so ausgebildet ist, daß er sofort nach Eingabe eines neuen Termins seine momentane Entfernung zum Terminort sowie die Fahrzeit dorthin ermittelt.

4. Elektronischer Terminplaner nach Anspruch 1, 2 oder 3, **dadurch gekennzeichnet, daß** er mit einer Abgleichanordnung (20) versehen ist, welche aus den eingeschriebenen Termindaten die Adresse für den Terminort aus einer vorhandenen Datei ermittelt.

5. Elektronischer Terminplaner nach Anspruch 2, 3 oder 4
**dadurch gekennzeichnet, daß** er so ausgebildet ist,
daß bei der Ermittlung der Fahrtzeit die für die Wegstrecke maßgeblichen Verzögerungen eingeschlossen werden, indem zumindest einmal vor Ausgabe des Signals aktuelle Meldungen aus einer Datenbank (30) abgefragt und ggf. in die Ermittlung der Fahrtzeit einbezogen werden.

6. Elektronischer Terminplaner nach einem der Ansprüche 1 bis 5
**dadurch gekennzeichnet,**
**daß** er mit einer weiteren Schnittstelle (18) versehen ist, die mit einer Datenquelle einer vom Terminplaner (10) getrennten Anordnung (19) in Datenaustausch steht, und
**daß** die Daten der Datenquelle in Abhängigkeit von den in das Kalendarium (11) eingetragenen Uhrzeiten abfragbar und/oder anzeigbar sind.

7. Elektronischer Terminplaner nach einem der Ansprüche 1 bis 6, **dadurch gekennzeichnet, daß** er das Modul (16) zur Bestimmung von geographischen Positionen und die Anordnung (17) zur Ermittlung und Ausgabe von Wegstrecken umfaßt.

8. Verfahren zur Terminplanung unter Verwendung eines elektronischen Terminplaners (10), in welchen Termine mindestens nach Ort, Datum und Uhrzeit eingegeben werden, **dadurch gekennzeichnet, daß** nach Eingabe eines Termins die benötigte Reisezeit zum Terminort ermittelt und dem Benutzer spätestens dann ein Signal gegeben wird, wenn die Summe aus momentaner Uhrzeit plus der ermittelten Reisezeit der Terminzeit entspricht.

9. Verfahren nach Anspruch 8, **dadurch gekennzeichnet, daß** in die ermittelte Reisezeit ein Sicherheitszuschlag eingerechnet wird.

10. Verfahren nach Anspruch 8 oder 9, **dadurch gekennzeichnet, daß** zur Ermittlung der Reisezeit der elektronische Terminplaner (10) mit einem Modul (16) zur Bestimmung seiner geographischen Position und einer Anordnung (17) zur Ermittlung und Ausgabe von Wegstrecken zusammenarbeitet, um anhand einer berechneten Wegstrecke zwischen momentaner Position und Terminort die Reisezeit zu bestimmen.

11. Verfahren nach Anspruch 10, **dadurch gekennzeichnet, daß** bei der Bestimmung der Reisezeit das Transportmittel und/oder der Zustand der Transportstrecke berücksichtigt werden.
